# EUROPÄISCHE PATENTANMELDUNG

(11) **EP 1 327 754 A1**
(43) Veröffentlichungstag der Anmeldung: **16.07.2003**
(21) Anmeldenummer: 02026044.4
(22) Anmeldetag: 22.11.2002
(51) Int. Cl.: F01N 3/02, F01N 3/28

(54) **Abgasanlage für Verbrennungsmotoren, mit einem Wärmetauscher zur Wärmeabfuhr aus dem Abgas**

(30) Priorität: 14.01.2002 DE 10201044
(71) Anmelder: J. Eberspächer GmbH & Co. KG, 73730 Esslingen (DE)
(72) Erfinder: Gaiser, Gerd, Dr., 72768 Reutlingen (DE); Damson, Björn, Dr., 70569 Stuttgart (DE); Zacke, Peter, Dr., 73095 Albershausen (DE)

(57) **Zusammenfassung**

Bei einer Abgasanlage (2) für Verbrennungsmotoren, welche einen Wärmetauscher (20) mit einer Umfangswand (28) und einem zugeordneten Zulaufrohr (22) zur Abfuhr von Wärme aus einem durch den Wärmetauscher (20) strömenden Abgasstrom (60) aufweist, ist in dem Zulaufrohr (22) ein Drallerzeuger (40) angeordnet, der einen zentralen Strömungsweg (50) durch das Zulaufrohr (22) frei lässt, wobei ein auf die Verlängerung des freien zentralen Strömungswegs (50) ausgerichteter Bereich des Wärmetauschers (20) Strömungshindernis-frei ist.

## Beschreibung

Gegenstand der Erfindung ist eine Abgasanlage für Verbrennungsmotoren, aufweisend einen Wärmetauscher mit einer Umfangswand und einem zugeordneten Zulaufrohr, zur Abfuhr von Wärme aus einem durch den Wärmetauscher strömenden Abgasstrom,
dadurch gekennzeichnet,
dass in dem Zulaufrohr ein Drallerzeuger angeordnet ist, der einen zentralen Strömungsweg durch das Zulaufrohr frei lässt;
und dass ein auf die Verlängerung des freien zentralen Strömungswegs ausgerichteter Bereich des Wärmetauschers Strömungshindernis-frei ist.

Vorzugsweise ist in dem Wärmetauscher ein vorn und hinten offenes Innenrohr angeordnet, dessen Eintrittsquerschnitt im Wesentlichen auf die Verlängerung des freien zentralen Strömungswegs ausgerichtet ist.

Vorzugsweise hat der Wärmetauscher einen größeren Strömungsquerschnitt als das zugeordnete Zulaufrohr, was in vielen Fällen die gewünschte Art der Strömungsbeeinflussung verbessert. Diese Querschnittserweiterung ist aber nicht zwingend erforderlich.

Abgasanlagen mit Wärmetauscher zur Abfuhr von Wärme aus dem Abgas sind bekannt. Beispielsweise wird auf bekannte Abgasanlagen für luftgekühlte Verbrennungsmotoren hingewiesen, die mit Wärmetauschern zur Wärmeübertragung von dem Abgas auf einen Luftstrom zu Beheizung des Innenraums des Fahrzeugs, in das der Verbrennungsmotor eingebaut ist, ausgerüstet sind. Die Steuerung der übertragenen Wärmemenge erfolgte durch Vergrößern oder Verkleinern der Luftmenge, die an der Wärme abgebenden Seite des Wärmetauschers entlang strömte.

Mit der Erfindung wird ein neuartiges Funktionsgebiet für Wärmetauscher in Abgasanlagen erschlossen. Erfindungsgemäße Wärmetauscher in Abgasanlagen eigenen sich insbesondere dafür, (bei Bedarf, wird weiter unten noch genauer erläutert) Wärme an die Umgebung abzuführen, so dass der Abgasstrom hinter dem Wärmetauscher eine niedrigere Temperatur als vor dem Wärmetauscher hat. Grundsätzlich betrachtet, ist auf diesem Funktionsgebiet die Wärmeabfuhr nach außen umso größer, je höher die Abgastemperatur beim Eintritt in den Wärmetauscher ist. Mit der Erfindung wird jedoch das technische Problem gelöst, in teilweisem Lösen von diesem Grundsatz eine Abgasanlage mit einem Wärmetauscher verfügbar zu machen, der eine stark vom momentanen Lastzustand des Verbrennungsmotors abhängige Charakteristik der Wärmeabfuhr hat.

Die wichtigsten Parameter des Abgasstroms eines Verbrennungsmotors sind sein Massenstrom (z.B. in kg/s), seine Temperatur und seine Strömungsgeschwindigkeit. Diese Parameter sind nicht alle unabhängig voneinander. Aus einem gegebenen Massenstrom mit gegebener Temperatur resultiert eine (mittlere) Strömungsgeschwindigkeit. Wenn sich bei konstant gehaltenem Massenstrom die Temperatur erhöht oder erniedrigt, erhöht sich wegen der damit einher gehenden Dichteänderung des Abgases die Strömungsgeschwindigkeit oder erniedrigt sich.

Mit der Erfindung wird eine Abgasanlage mit Wärmetauscher geschaffen, bei welcher die Wärmeabfuhr mittels des Wärmetauschers bei Strömungsgeschwindigkeiten in einem oberen Teilbereich desjenigen Bereichs von Strömungsgeschwindigkeiten, der beim Betrieb der Abgasanlage vorkommt, sehr viel größer als in einem unteren Teilbereich der vorkommenden Strömungsgeschwindigkeiten ist. Eine analoge Aussage könnte man für den Massenstrom oder für die Temperatur des Abgasstroms machen. Der Unterschied geht weit über das hinaus, was mit der Steigerung der Wärmeübertragungsbedingungen bei Erhöhung von Strömungsgeschwindigkeit bzw. Massenstrom bzw. Abgastemperatur einher geht.

Bei der erfindungsgemäßen Abgasanlage wird vielmehr ein neuartiges Funktionsprinzip der Abhängigkeit der Wärmeübertragung von den genannten Parametern verwirklicht. Bei einem niedrigen Teilbereich der vorkommenden Strömungsgeschwindigkeiten (man könne auch sagen: Bei einem niedrigen Teilbereich der vorkommenden Massenströme oder Bei einem niedrigen Teilbereich der vorkommenden Abgastemperaturen, wobei die gegenseitige Abhängigkeit der genannten Parameter zu berücksichtigen ist) strömt das Abgas überwiegend oder sogar nahezu vollständig nur durch den freien zentralen Strömungsweg im Zulaufrohr und von dort in den Eintrittsquerschnitt des Innenrohrs. In dem Ringraum zwischen dem Innenrohr und der Umfangswand des Wärmetauschers befindet sich bewegungsarmes Abgas, so dass nur ein geringer Wärmeübergang zu der Umfangswand und somit nur eine geringe Wärmeabfuhr nach außen stattfindet. Bei höheren Strömungsgeschwindigkeiten in einem oberen Teilbereich der vorkommenden Strömungsgeschwindigkeiten (man könnte auch sagen: Bei höheren Massenströmen oder Bei höheren Abgastemperaturen, wobei die gegenseitige Abhängigkeit dieser Parameter zu berücksichtigen ist) durchströmt hingegen ein sehr erheblicher Teil des Abgasstroms den Drallerzeuger und verlässt diesen als Drallströmung mit erheblicher Komponente in Umfangsrichtung. Bei kräftiger Drallströmung wird wegen der Zähigkeitskräfte im Abgas auch dem durch den freien zentralen Strömungsweg strömenden Teil des Abgases ein Drall aufgeprägt. Auf Grund der in der Gesamt-Drallströmung vorhandenen Zentrifugalkräfte wird die Strömung nach Verlassen des Zulaufrohrs weit überwiegend oder nahezu vollständig nach außen in den Ringraum zwischen dem Innenrohr und der Umfangswand des Wärmetauschers strömen. Jetzt sind optimale Voraussetzungen für die Übertragung einer großen Wärmemenge durch den Wärmetauscher nach außen gegeben; auch die hohe Turbulenz der Drallströmung und die vergleichsweise längere Verweilzeit in dem Wärmetauscher auf Grund des spiralartigen Strömungswegs wirken in dieser Richtung. - Bei mittleren Strömungsgeschwindigkeiten bzw. Massenströmen bzw. Abgastemperaturen werden hingegen sowohl das Innenrohr als auch der Ringraum zwischen dem Innenrohr und der Umfangswand durchströmt. Die nach außen abgeführte Wärmemenge liegt im mittleren Bereich; selbst wenn man den Fall gleicher Abgastemperatur im Vergleich zur vorher geschilderten Situation hoher Strömungsgeschwindigkeit betrachtet, ist die Wärmeabfuhr geringer, weil der strömungsmechanisch beeinflusste Wärmeübergang auf die Umfangswand niedriger ist.

Aus der vorstehenden Erläuterung ist deutlich, dass die möglichst weit gehende Unterdrückung der Durchströmung des Ringraums zwischen dem Innenrohr und der Umfangswand des Wärmetauschers bei niedrigen Strömungsgeschwindigkeiten wünschenswert ist, wenn man bei derartigen Betriebszuständen des Verbrennungsmotors eine möglichst geringe Wärmeabfuhr haben möchte. Am anderen Ende der Skala, d.h. bei höheren Strömungsgeschwindigkeiten, ist jedoch die Vermeidung der Durchströmung des Innenrohrs nicht von derart hoher Bedeutung, weil es für möglichst große Wärmeabfuhr primär auf die Strömungsverhältnisse an der Innenseite der Umfangswand ankommt.

Bei Verbrennungsmotoren steigt der durch die Abgasanlage strömende Massenstrom generell mit zunehmender Drehzahl an (wobei dieser Anstieg wegen der Überlagerung anderer Effekte nicht linear ist). Da das Zulaufrohr einen festgelegten Strömungsquerschnitt hat, erhöht sich entsprechend auch die Strömungsgeschwindigkeit. Wenn man bei konstant gehaltenen Massenstrom den Fall höherer Abgastemperatur betrachtet, dann beobachtet man - wegen der verringerten Dichte des Abgases - eine höhere Strömungsgeschwindigkeit. Diese Zusammenhänge führen dazu, dass bei niedrigen Lastzuständen des Verbrennungsmotors (besonders typisch: Leerlauf, aber auch Betrieb mit ziemlich niedrigen Drehzahlen, ganz besonders bei nicht weit geöffneter Drosselklappe) der Betriebszustand des Wärmetauschers mit überwiegender oder nahezu vollständiger Strömung des Abgases nur durch das Innenrohr herrscht. Die im Abgas enthaltene Wärme verbleibt praktisch vollständig im Abgas! - Bei hohen Lastzuständen des Verbrennungsmotors (besonders typisch: höhere Drehzahlen, ganz besonders wenn die Drosselklappe weit geöffnet ist) herrscht hingegen der andere Betriebszustand des Wärmetauschers, bei dem der Abgasstrom weit überwiegend oder sogar nahezu vollständig durch den Ringraum zwischen dem Innenrohr und der Umfangswand des Wärmetauschers strömt. In diesem Betriebszustand erfolgt hohe Wärmeabfuhr; der Wärmetauscher wirkt wie ein Abgaskühler. - Bei Betriebszuständen des Verbrennungsmotors zwischen den geschilderten Extremen hat man Wärmeabfuhr irgendwo zwischen den Extremen.

Diese Charakteristik der Wärmeabfuhr in Abhängigkeit von den Parametern Abgas-Massenstrom, Abgas-Strömungsgeschwindigkeit, Abgas-Temperatur ist von besonders vorteilhafter Bedeutung, wenn man sich eine Abgasanlage eines Verbrennungsmotors vorstellt, bei der strömungsabwärts von dem Wärmetauscher ein katalytischer Abgaskonverter oder auch eine andere gegenüber hohen Temperaturen empfindliche Komponente vorhanden ist. Gerade dann, wenn auf Grund hoher Abgabeleistung des Verbrennungsmotors hohe Äbgastemperaturen drohen, wird durch maximale Kühlung des Abgases mittels des Wärmetauschers gegengesteuert. Andererseits ist bei geringer Leistungsabgabe des Verbrennungsmotors, die mit niedrigen Abgastemperaturen einher geht, im häufig gewünschten Sinn geringe oder gar keine Kühlung des Abgases gegeben. Besonders hervor zu heben ist auch das günstige Verhalten beim Kaltstart. Wenn, was ein in der Praxis häufiger Fall ist, nach dem Kaltstart vorwiegend mit vergleichsweise geringer Leistungsabgabe gefahren wird, herrscht geringe Abgaskühlung; ein weiter strömungsabwärts positionierter katalytischer Abgaskonverter erreicht optimal schnell seine "Anspringtemperatur", bei der die katalytische Umsetzung bestimmter Abgasbestandteile beginnt. Es kommt noch der besonders günstige Effekt hinzu, dass das Innenrohr eine sehr viel geringere Wärmekapazität als der gesamte Wärmetauscher hat. Wenn im Wesentlichen die gesamte Abgasströmung nur durch das Innenrohr strömt, muss zunächst auch nur das Innenrohr erwärmt werden. Da das Innenrohr keine tragende Funktion hat, kann es dünnwandig mit besonders niedriger Wärmekapazität ausgeführt werden.

Bei Ausführungsformen der Erfindung ohne Innenrohr kann man den Wärmetauscher durchaus so auslegen, dass der bei kleinen Strömungsgeschwindigkeiten primär durch den freien zentralen Strömungsweg strömende Abgasstrom in dem Wärmetauscher als Freistrahl strömt und am Ende des Wärmetauschers in einem zugeordneten Ablaufrohr eingefangen wird. Bei höheren Strömungsgeschwindigkeiten des Abgases bzw. höheren Massenströmen bzw. höheren Abgastemperaturen kommt es mehr und mehr zur Ausbildung der Drallströmung, wie geschildert. In Axialrichtung nicht besonders lange Wärmetauscher begünstigen die Ausführbarkeit des Wärmetauschers ohne Innenrohr.

Es wird betont, dass auch bei den Ausführungsformen der Erfindung mit Innenrohr der Ringraum zwischen dem Innenrohr und der Umfangswand und/oder der Strömungsquerschnitt des Innenrohrs vorzugsweise Strömungshindernis-frei sind. Es ist aber alternativ möglich, mit einem Strömungshindernis in dem Ringraum und/oder in dem Innenrohr für eine gezielte Komponente der Strömungsbeeinflussung hinsichtlich "Strömung bevorzugt zentral"/"Strömung bevorzugt außen" zu schaffen.

Vorzugsweise ist die Auslegung im Bereich des Wärmetauschers so, dass mindestens 40%, besonders bevorzugt mindestens 50% und ganz besonders bevorzugt mindestens 60%, des zuströmenden Abgasstroms durch das Innenrohr bzw. als zentraler Freistrahl durch den Wärmetauscher strömen, wenn der Abgasstrom eine Strömungsgeschwindigkeit in einem unteren Teilbereich des beim Betrieb der Abgasanlage auftretenden Bereichs von Strömungsgeschwindigkeiten hat. Der genannte untere Teilbereich umfasst vorzugsweise 0 bis 10%, ganz besonders bevorzugt 0 bis 20% und höchst bevorzugt 0 bis 30%, des Gesamtbereichs der auftretenden Strömungsgeschwindigkeiten.

Vorzugsweise ist die Abgasanlage im Bereich des Wärmetauschers so ausgelegt, dass mindestens 80%, besonders bevorzugt mindestens 90%, des zuströmenden Abgasstroms durch den Ringraum zwischen dem Innenrohr und der Umfangswand bzw. durch den Ringraum außerhalb des zentralen Freistrahls strömen, wenn der Abgasstrom eine Strömungsgeschwindigkeit in einem oberen Teilbereich des beim Betrieb in der Abgasanlage auftretenden Bereichs' von Strömungsgeschwindigkeiten hat. Der genannte obere Teilbereich umfasst vorzugsweise 80 bis 100%, besonders bevorzugt 70 bis 100%, des Gesamtbereichs der auftretenden Strömungsgeschwindigkeiten.

Was die Flächengröße des Eintrittsquerschnitts des Innenrohrs anlangt, ist es bevorzugt, wenn diese Flächengröße in dem Bereich liegt, der mit der Querschnittsfläche des freien zentralen Strömungswegs beginnt und bis zu dem Gesamtströmungsquerschnitt des stromabwärtigen Endes des Zulaufrohrs geht. Es ist aber auch möglich, den Eintrittsquerschnitt des Innenrohrs noch größer zu machen.

Vorzugsweise ist der Drallerzeuger mit seiner Außenseite an der Innenseite des Zulaufrohrs befestigt, besonders bevorzugt angeschweißt. Auf diese Weise ist eine äußere Umströmung des Drallerzeugers ausgeschlossen. Alternativ ist bevorzugt, dass der Drallerzeuger integral mit dem Zulaufrohr hergestellt worden ist, insbesondere durch Gießen oder durch Hochdruckumformung.

Zur konkreten technischen Verwirklichung des Drallerzeugers gibt es eine Reihe von Möglichkeiten. Nach einer ersten bevorzugten Möglichkeit weist der Drallerzeuger einen ringförmigen Kranz von Leitschaufeln auf. Nach einer zweiten bevorzugten Möglichkeit weist der Drallerzeuger mindestens ein wendelfömig längs des Zulaufrohrs verlaufendes Strömungsleitelement auf; die Ausdrucksweise "längs des Zulaufrohrs" soll nicht etwa "längs des gesamten Zulaufrohrs" bedeuten, sondern lediglich die Längsausrichtung des Strömungsleitelements wiedergeben.

Funktional kommt es bei dem erfindungsgemäß vorgesehenen Drallerzeuger darauf an, dass bei relativ niedrigen Strömungsgeschwindigkeiten des Abgases (bz.w Massenströmen bzw. Temperaturen) praktisch überhaupt kein oder nur wenig Drall erzeugt wird, während bei relativ hohen Strömungsgeschwindigkeiten (bzw. Massenströmen bzw. Temperaturen) viel Drall erzeugt wird. Dabei kann auf praktisch vollständige "Strömungsumschaltung" ausgelegt werden, also unterhalb eines ersten Schwellenwerts der Strömungsgeschwindigkeit praktisch 100% für die Strömung durch das Innenrohr und praktisch 0% für die Strömung durch den Ringraum, und oberhalb eines zweiten Schwellenwerts der Strömungsgeschwindigkeit praktisch 0% zur Strömung durch das Innenrohr und praktisch 100% zur Strömung durch den Ringraum. Alternativ kann man aber die Auslegung mit weniger scharfer Strömungsumschaltung machen, also z.B. nie weniger als 20% (vorzugsweise nie weniger als 10%) zur Durchströmung des Innenrohrs und nie weniger als 30% (vorzugsweise nie weniger als 20%) zur Durchströmung des Ringraums. All diese Angaben gelten analog für die Variante mit Freistrahl.

Außerdem kann man durch Auslegung des Drallerzeugers bestimmen, wann des Umschalten deutlich einsetzt und wann das Umschalten deutlich aufhört.

Folgende Geometrieparameter, welche die Auslegung beeinflussen, seien genannt:
- Anzahl der Leitschaufeln über den Umfang;
- Anzahl der wendelförmigen Strömungsleitelemente, die umfangsmäßig versetzt vorgesehen sind;
- Überlappung der Leitschaufeln in axialer Blickrichtung;
- Anstellwinkel der Leitschaufeln oder des wendelförmigen Strömungsleitelements ("Steigung");
- Höhe der Leitschaufeln oder des Strömungsleitelements und dadurch bestimmt der Durchmesser des freien zentralen Strömungswegs;
- Länge der Leitschaufeln bzw. des Strömungsleitelements in Axialrichtung;
- Position des Drallerzeugers in axialer Hinsicht in dem Zulaufrohr (axialer Abstand zum Ende des Zulaufrohrs oder axialer Überstand über das Ende des Zulaufrohrs hinaus);
- zunehmender Anstellwinkel der Leitschaufeln (d.h. gekrümmte Leitschaufeln) oder zunehmender Anstellwinkel des Strömungsleitelements (d.h. abnehmende Steigung) längs des Drallerzeugers;
- zunehmende Höhe der Leitschaufeln oder des Strömungsleitelements längs des Drallerzeugers;
- Durchmesser des Zulaufrohrs;
- Durchmesser des Innenrohrs;
- Durchmesser des Wärmetauschers bei der Umfangswand bzw. Strömungsquerschnitt des Ringraums zwischen dem Innenrohr und der Umfangswand;
- Winkel der Erweiterung bei dem Erweiterungsabschnitt;
- axialer Abstand zwischen dem Drallerzeuger und dem Innenrohr.

Die Anzahl der Leitschaufeln bzw. der Strömungsleitelemente hat einen erheblichen Einfluss auf die Gleichmäßigkeit des erzeugten Zentrifugalfelds. Eine größere Anzahl bewirkt ein gleichmäßiges Zentrifugalfeld. Andererseits nimmt der Druckverlust des Drallerzeugers mit der Anzahl zu.

Wenn der Drallerzeuger mit überlappenden Leitschaufeln ausgelegt wird, hat man schon bei geringen Strömungsgeschwindigkeiten einen fühlbaren Strömungswiderstand im Drallerzeuger; die Abströmung erfolgt besonders ausgeprägt nur in das Innenrohr. Andererseits hat man bei hohen Strömungsgeschwindigkeiten einen relativ hohen Strömungswiderstand.

Der Anstellwinkel der Leitschaufeln bzw. des Strömungsleitelements hat einen besonders großen Einfluss auf die Stärke des erzeugten Dralls. Stark angestellte Leitschaufeln führen z.B. schon bei mittleren Strömungsgeschwindigkeiten zu einem so starken Drall, dass der Teil des Abgasstroms durch das Innenrohr sehr klein wird. Bei besonders großen Zentrifugalkräften der Drallströmung wird der Druck im Kernbereich der Strömung, d.h. durch den freien zentralen Strömungsweg, so klein, dass ein Abströmen in das Innenrohr weitgehend vermieden werden kann. Der Anstellwinkel wird relativ zur Axialrichtung des Zulaufrohrs gemessen.

Die Höhe der Leitschaufeln bzw. des Strömungsleitelements, besonders in Relation zu dem Gesamtdurchmesser des Zulaufrohrs, hat besonders Einfluss auf den Anteil der Strömung, der bei kleinen Strömungsgeschwindigkeiten in das Innenrohr strömen soll. Bei relativ geringer Höhe der Leitschaufeln bzw. des Strömungsleitelements und damit einem großen Durchmesser des freien zentralen Strömungswegs wird ein großer Teil der Strömung in das Innenrohr strömen.

Bei der axialen Länge der Leitschaufeln bzw. des Strömungsleitelements ist die Tendenz grundsätzlich so, dass bei einer größeren Länge ein stärkerer Drall auch im freien zentralen Strömungsweg erzeugt wird. Mit zunehmender Länge nimmt der Druckverlust des Drallerzeugers zu. Längs des Drallerzeugers zunehmender Anstellwinkel der Leitschaufeln bzw. des Strömungsleitelements und längs des Drallerzeugers zunehmende Höhe der Leitschaufeln bzw. des Strömungsleitelements reduzieren den Druckverlust im Vergleich zu Drallerzeugung ohne diese Maßnahmen.

Der Durchmesser des Innenrohrs in Relation zu dem Durchmesser des freien zentralen Strömungswegs ist von besonders großem Einfluss auf die Bestimmung des Weiterströmwegs. Je größer in dieser Relation der Druchmesser des Innenrohrs ist, desto schärfer kann man bei niedrigen Geschwindigkeiten einen Anteil von praktisch 100% der Abströmung durch das Innenrohr erhalten und desto mehr verschiebt sich die Beteiligung der Strömung durch den Ringraum nach oben.

Auch der Abstand zwischen dem Drallerzeuger und dem Eintrittsquerschnitt des Innenrohrs hat beträchtlichen Einfluss. Je größer dieser Abstand ist, desto mehr wird die Strömungs durch den Ringraum begünstigt.

Die Leitschaufeln können verwunden (= Anstellwinkel, der sich beim Fortschreiten längs des Radius ändert) sein oder nicht.

Bei höheren Strömungsgeschwindigkeiten des Abgases im Zulaufrohr bewirkt der Drallerzeuger außerhalb des freien zentralen Strömungswegs eine Drallströmung, die zumindest hinter dem Drallerzeuger und bei Strömungsgeschwindigkeiten in einem oberen Teilbereich des beim Betrieb der Abgasanlage auftretenden Bereichs von Strömungsgeschwindigkeiten eine Mitnahme der Zentralströmung nach sich zieht. Mindestens bei derartigen Betriebszuständen bewegt sich die Strömung an der Innenseite der Umfangswand mit sehr erheblicher Strömungskomponente in Umfangsrichtung. Je weiter die Strömung im Wärmetauscher in Axialrichtung weiter strömt, desto mehr klingt die Umfangskomponente ab, wobei kinetische Energie der Strömung verloren geht, was sich letztlich als Druckverlust des Wärmetauschers äußert. Wenn man hingegen die Strömung im Ringraum zwischen dem Innenrohr und der Umfangswand vor dem Verlassen des Wärmetauschers wieder in Axialrichtung umlenkt, kann man die kinetische Energie der Drallkomponente der Strömung zumindest zum Teil zurückgewinnen, so dass der Wärmetauscher einen geringeren Druckverlust als ohne diese Maßnahme hat.

Deshalb ist es bevorzugt, wenn der Wärmetauscher mindestens in einem Teil seiner Länge (vorzugsweise ein mehr stromabwärtiger Teil) innen an seiner Umfangswand ein Strömungsleitelement aufweist, welches die dortige Abgasströmung im Sinne einer Vergrößerung ihrer axialen Strömungskomponente leitet. Auch hier kann man mit sich über die Länge des Wärmetauschers ändernder Steigung, insbesondere sich vergrößernder Steigung, arbeiten.

Es gibt praktische Ausführungsfälle, bei denen es günstig und deshalb bevorzugt ist, den Wärmetauscher mindestens in einem Teil seiner Länge (vorzugsweise ein mehr stromaufwärtiger Teil) innen an seiner Umfangswand mit einem Strömungsleitelement auszustatten, welches die dortige Abgasströmung mit Umfangskomponente leitet. Dies kann zu einer Vergrößerung der Umfangsgeschwindigkeitskomponente der Strömung im Vergleich zum Austritt aus dem Drallerzeuger führen, was - wie weiter vorne schon angesprochen - zu einer Vergrößerung der Wärmeabfuhr bei ansonsten gleichen Parametern führt; es kann sich aber auch um im Wesentlichen eine Beibehaltung der Umfangsgeschwindikeitskomponente der Strömung handeln, um ein zu frühes Abklingen der Drallströmung im Wärmetauscher zu verhindern; es kann sich schließlich auch um ein Übergehen zu der im vorstehenden Absatz angesprochenen, allmählichen Umlenkung in insgesamt mehr oder weniger perfekte, axiale Strömung handeln.

Beide beschriebenen Arten des Strömungsleitelements innen an der Umfangswand können vorzugsweise eine wendelartige Rippe sein, die durch nach innen vorragende Verformung des Materials der Umfangswand hergestellt worden ist. Einprägen oder Hochdruckumformung sind besonders bevorzugte Beispiele. Eine andere bevorzugte Möglichkeit ist die Anbringung eines blechstreifenartigen Strömungsleitelements. Radiale Höhe und Steigung des Strömungsleitelements können sich längs des Wärmetauschers ändern. Die radiale Höhe kann im oberen Grenzfall so groß sein, dass das Strömungsleitelement nach innen bis zu dem Innenrohr geht; das Innenrohr kann mit Hilfe des Strömungsleitelements in dem Wärmetauscher befestigt sein. In den meisten Fällen hat das Strömungsleitelement jedoch eine deutlich geringere Höhe und erstreckt sich vorzugsweise mit einer Höhe von 5 bis 20 mm radial von der Umfangswand nach innen.

Überhaupt kann man zur Verbesserung des Wärmeübergangs an der Innenseite der Umfangswand eine Oberflächenvergrößerung durch ein oder mehrere, rippenartige Elemente vorsehen. Am günstigsten ist es, bei der Auslegung der genannten Strömungsleitelemente zusätzlich den Gesichtspunkt der Wärmeübertragung zu berücksichtigen.

Wendelartig profilierte Rohr sind kommerziell erhältlich. Diese können vorteilhaft für die Herstellung der Umfangswand des Wärmetauschers benutzt werden.

In Weiterbildung der Erfindung ist es bevorzugt, wenn sich der Strömungsquerschnitt längs des Wärmetauschers ändert. Dies kann für das Innenrohr gelten, gilt aber ganz besonders für die Umfangswand. So kann man z.B. durch allmähliche Vergrößerung des Strömungsquerschnitts in dem Ringraum zwischen dem Innenrohr und der Umfangswand längs des Wärmetauschers eine diffusorartige Ausbildung erreichen. Von besonderer Bedeutung ist, dass man es durch Änderung des Strömungsquerschnitts längs des Wärmetauschers in der Hand hat, in dem betreffenden Bereich eine Vergrößerung oder eine Verkleinerung der Wärme übertragenden Fläche, verglichen mit längs des Wärmetauschers konstant bleibendem Querschnitt, zu erzeugen.

Das Zulaufrohr hat im Interesse einer effektiven Erzeugung der Drallströmung vorzugsweise einen kreisrunden Querschnitt. Ein kreisrunder Querschnitt ist auch für den Verlauf der Umfangswand bzw. den Wärmetauscher insgesamt bevorzugt, weil dies für eine spiralförmige Durchströmung die besten Strömungsvoraussetzungen bietet. Alternativ ist jedoch eine im Wesentlichen elliptische Konfiguration des Wärmetauscherquerschnitts bevorzugt. Eine im Wesentlichen elliptische Querschnittskonfiguration ist bei Schalldämpfern, die unter dem Boden von Kraftfahrzeugen angebracht sind, recht häufig anzutreffen. Wie bei Schalldämpfern ist bei dem erfindungsgemäßen Wärmetauscher die geringere Bauhöhe im Vergleich zu einem querschnittsgleichen Wärmetauscher mit kreisrundem Querschnitt als Vorteil hervorzuheben.

Vorzugsweise ist die erfindungsgemäße Abgasanlage insgesamt so aufgebaut, dass sich der Wärmetauscher stromaufwärts von einem katalytischen Abgaskonverter befindet. In diesem Fall hat der Wärmetauscher eine Temperatur egalisierende Funktion für den weiter stromab befindlichen katalytischen Abgaskonverter. Nach dem Starten des Verbrennungsmotors erreicht der Abgaskonverter besonders schnell seine Betriebstemperatur. In Betriebsphasen mit hohen Abgastemperaturen wird durch den Wärmetauscher Wärme an die Umgebung abgeführt, so dass der Abgaskonverter kälter bleibt als ohne den Wärmetauscher und deshalb eine höhere Lebensdauer erreicht.

Der katalytische Abgaskonverter kann, wie heute bei Benzin-Verbrennungsmotoren in Kraftfahrzeugen weithin üblich, ein sogenannter "Dreiwegekatalysator" sein, der Stickoxide zu Stickstoff reduziert und Kohlenmonoxid und unverbrannte Kohlenwasserstoffe zu Kohlendioxid oxidiert. Der Abgaskonverter kann aber auch ein sogenannter "Speicherkatalysator" sein, wie er seit jüngerer Zeit für Verbrennungsmotoren mit Benzindirekteinspritzung eingesetzt wird. Ein "Speicherkataly-sator" speichert in bestimmten Betriebsphasen Stickoxide und reduziert diese in anderen Betriebsphasen mit besonders fetter Verbrennung. Praktisch alle Abgaskonverter haben einen bestimmten Betriebstemperaturbereich, wobei jedoch je nach Typ des Abgaskonverters der Betriebstemperaturbereich schmaler oder breiter ist. Der erfindungsgemäße Wärmetauscher bietet besonders große Vorteile, wenn er in einer Abgasanlage vorgesehen ist, die auch einen Abgaskonverter mit relativ schmalem Betriebstemperaturbereich enthält.

Wenn in der vorliegenden Anmeldung von Strömungsgeschwindigkeit und Temperatur des durch das Zulaufrohr strömenden Abgasstroms gesprochen wird, wird ein Strömungsquerschnitt vor dem Drallerzeuger betrachtet. Da Strömungsgeschwindigkeit und Temperatur über den Querschnitt nicht konstant sind, sind über den Querschnitt gemittelte Werte gemeint. Angesichts der Abgaspulsationen sind für geeignete kurze Zeitintervalle zeitlich gemittelte Werte gemeint. Insgesamt könnte man alternativ den Massenstrom betrachten, insbesondere weil hier die Querschnittsmittelung nicht erforderlich ist. Konstante Abgastemperatur betrachtet, hängt die mittlere Strömungsgeschwindigkeit unmittelbar mit dem Massenstrom zusammen. Konstanten Massenstrom betrachtet, hängt die gemittelte Strömungsgeschwindigkeit unmittelbar mit der Abgastemperatur zusammen. Statt mit dem Begriff Strömungsgeschwindigkeit könnte man die Aussagen in der vorliegenden Anmeldung auch mit dem Begriff "tempetaturnormierter Massenstrom" verknüpfen.

Wenn vorstehend über Strömung durch das Innenrohr und Strömung durch den Ringraum zwischen dem Innenrohr und der Umfangswand und die Beeinflussung dieser Strömungen durch den Drallerzeuger etc. gesprochen worden ist, dann sollen sich diese Aussagen analog auch auf Zentralströmung in einem Freistrahl und Außenströmung außerhalb des Freistrahls beziehen.

Es ist möglich, den hinteren Endbereich des Innenrohrs mit Perforationen zu versehen, so dass dort ein Druckausgleich mit dem Ringraum stattfinden kann. Dies kann zur Reduktion von Strömungsverlusten führen.

Es wird betont, dass der Begriff Ringraum auch solche Ausführungen der Erfindung mit umfassen soll, bei denen - in axialer Blickrichtung gesehen - kein kontinuierlicher Ringraum über den gesamten Umfang vorhanden ist, sondern nur einzelne Strömungswege an gegenüber dem Zentrum versetzter Stelle. Ein konkretes Beispiel hierfür wird weiter unten gegeben.

Es gibt Ausführungsformen, bei denen es günstig ist, die Längsmittelachse des Innenrohrs gegenüber der Längsmittelachse des Gesamt-Wärmetauschers versetzt anzuordnen. Als typische Beispiele hierfür seien nicht-zentrale Positionierung des Zulaufrohrs und schräge Einmündung des Zulaufrohrs in den eigentlichen Wärmetauscher genannt. Der Eintrittsquerschnitt des Innenrohrs soll so positioniert sein, dass der durch den freien zentralen Strömungsweg strömende Abgasstrom bzw. der nicht von der Drallströmung erfasste Teil des Abgasstroms in den Eintrittsquerschnitt des Innenrohrs gelangt.

Es wird betont, dass nicht nur die bisher angesprochene Abgasanlage Gegenstand der Erfindung ist, sondern auch der angesprochene Wärmetauscher mit zugeordnetem Zulaufrohr ein Gegenstand der Erfindung ist. Alle offenbarten Vorzugsausbildungen gelten nicht nur für die Abgasanlage insgesamt, sondern auch für deren, die Erfindung verkörpernden Bestandteil "Wärmetauscher mit zugeordnetem Zulaufrohr".

Aus dem Dokument WO 00/12879 ist ein katalytischer Abgaskonverter mit einem zugeordneten Zulaufrohr bekannt, in dem ein Drallerzeuger, der einen zentralen Strömungsweg durch das Zulaufrohr frei lässt, angeordnet ist. Dort ist jedoch die Ausbildung so, dass eine gleichmäßige Anströmung der vorderen Stirnfläche des Katalysatorkörpers erreicht werden soll.

Die Erfindung und bevorzugte Ausführungen der Erfindung werden nachfolgend anhand von schematisiert zeichnerisch dargestellten Ausführungsbeispielen noch näher erläutert. Es zeigt:
Fig. 1 eine Abgasanlage in Seitenansicht, sozusagen einbaufertig zum Einbau von unten an ein Kraftfahrzeug mit Verbrennungsmotor;
Fig. 2 einen Wärmetauscher mit zugeordnetem Zulaufrohr und zugeordnetem Ablaufrohr im Längsschnitt;
Fig. 3 den Wärmetauscher von Fig. 2 in der geschnittenen Stirnansicht gemäß III-III in Fig. 2;
Fig. 4 einen Querschnitt analog Fig. 3, wobei der Wärmetauscher abgewandelt eine elliptische Konfiguration hat;
Fig. 5 einen Querschnitt analog Fig. 3, wobei der Wärmetauscher eine abgewandelte, stärker elliptische Konfiguration hat;
Fig. 6 in einem Längsschnitt analog Fig. 2 einen Teil eines Wärmetauschers, wobei in dem Zulaufrohr ein Drallerzeuger anderer Ausbildung vorhanden ist;
Fig. 7 eine perspektivische Darstellung eines weiteren Ausführungsbeispiels eines Wärmetauschers mit Zulaufrohr;
Fig. 8 eine perspektivische Darstellung eines weiteren Ausführungsbeispiels eines Wärmetauschers mit Zulaufrohr;
Fig. 9 einen Wärmetauscher anderer Ausführungsform im Querschnitt.

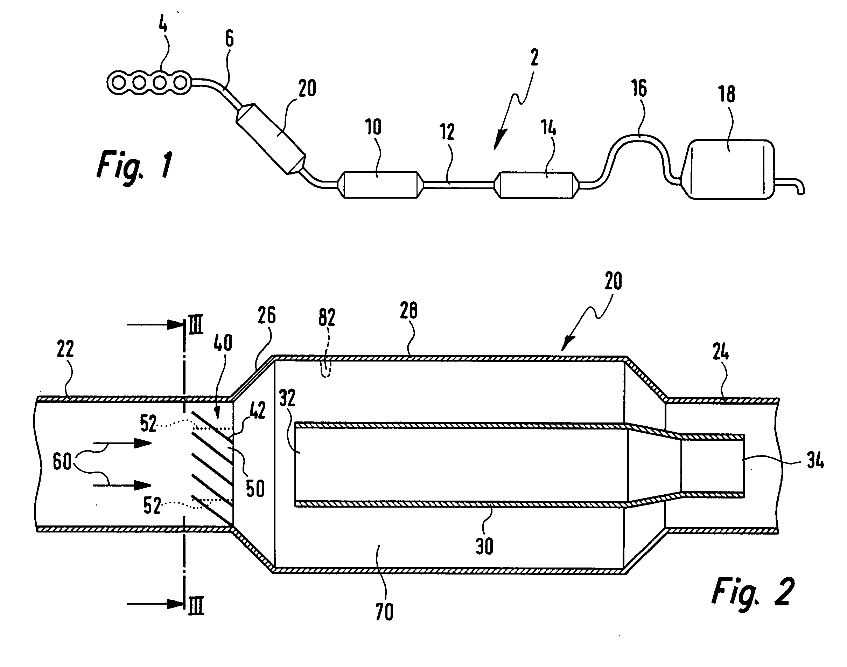

In Fig. 1 ist eine Abgasanlage 2 für einen Verbrennungsmotor eines Kraftfahrzeugs mit ihren wesentlichsten Komponenten dargestellt. Fortschreitend vom stromaufwärtigen Ende zum stromabwärtigen Ende hat man die folgenden Komponenten: Krümmer 4, der an den Zylinderkopf des Verbrennungsmotors angeschraubt wird und die Abgase aus den Zylindern des Verbrennungsmotors in einen gemeinsamen Rohrabschnitt 6 zusammenführt; Wärmetauscher 20; katalytischer Abgaskonverter 10; Rohrabschnitt 12; Mittelschalldämpfer 14; Rohrabschnitt 16, der um die Hinterachse des Kraftfahrzeugs herumführt; Endschalldämpfer 18.

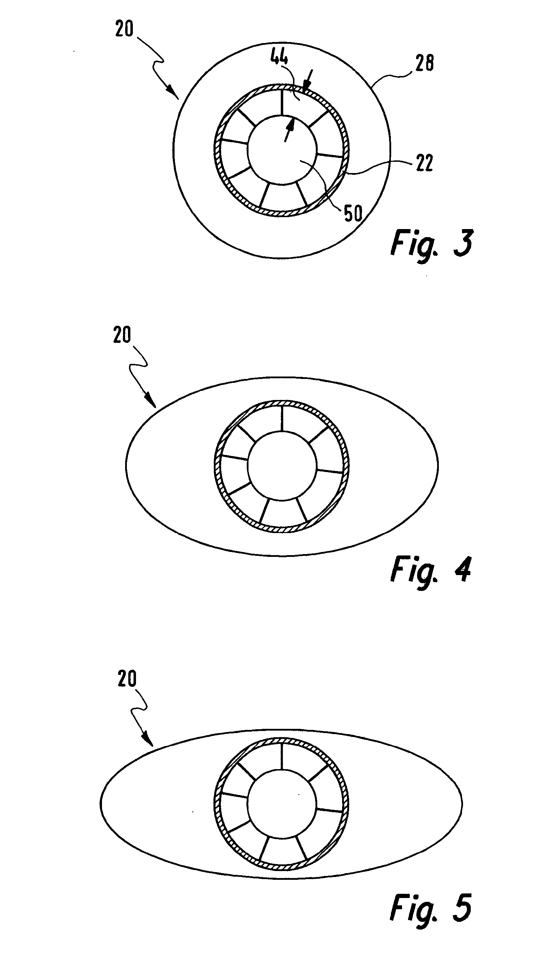

In Fig. 2 ist eine erste Ausführungsform eines erfindungsgemäßen Wärmetauschers 20 mit zugeordnetem Zulaufrohr 22 und zugeordnetem Ablaufrohr 24 dargestellt. Wie in Fig. 3 erkennbar, hat das Zulaufrohr 22 einen kreisrunden Querschnitt und hat der eigentliche Wärmetauscher 20 ebenfalls einen kreisrunden Querschnitt, wobei ein konusförmiger Übergang 26 zwischen dem Zulaufrohr 22 und einer kreiszylindrischen Umfangswand 28 des Wärmetauschers 20 vorhanden ist. Auch das Ablaufrohr 24 hat einen kreisrunden Querschnitt.

Im Inneren des Wärmetauschers 20 ist ein Innenrohr 30, ebenfalls mit kreisrundem Querschnitt, positioniert. Das Innenrohr 30 hat vorne einen offenen Eintrittsquerschnitt 32 und hinten einen offenen Austrittsquerschnitt 34. Der Eintrittsquerschnitt 32 liegt ein Stück strömungsabwärts von dem Übergang 26. Das Innenrohr 30 ist konzentrisch in dem Wärmetauscher 20 positioniert. Das Innenrohr 30 ist durch nicht eingezeichnete Halterungen in dem Wärmetauscher 20 und/oder an dem Zulaufrohr 22 und/oder an dem Ablaufrohr 24 befestigt, wobei die Halterungsteile vorzugsweise stabförmig und zu mehreren umfangsmäßig verteilt vorgesehen sind.

In dem Zulaufrohr 22 ist kurz vor dem Beginn des Übergangs 26 ein Drallerzeuger 40 vorgesehen. Der Drallerzeuger 40 besteht aus einem umfangsmäßig verteilten Kranz von Leitschaufeln 42, die in Fig. 2 schematisiert als schräg gestellte Bleche dargestellt sind und in Fig. 3 etwas anschaulicher zu sehen sind. Die Leitschaufeln 42 sind an ihrem radial äußeren Rand an der Innenseite des Zulaufrohrs 22 angeschweißt und haben eine radiale Höhe 44, siehe Fig. 3. Die Leitschaufeln 42 lassen mit ihren inneren Rändern einen zentralen Strömungsweg 50 frei, dessen Durchmesser bei dem gezeichneten Ausführungsbeispiel etwa 60% des Innendurchmessers des Zulaufrohrs 22 beträgt. In Fig. 2 ist der Durchmesser des zentralen Strömungswegs mit zwei gepunkteten Linien 52 angedeutet. Der Durchmesser des Eintrittsquerschnitts 32 des Innenrohrs 30 ist ein wenig größer als der Durchmesser des zentralen Strömungswegs 50, wobei sich dieser Durchmesserunterschied bei einem Vergleich der Strömungsquerschnitte naturgemäß viel stärker auswirkt. Der Eintrittsquerschnitt 32 ist auf die Verlängerung des zentralen Strömungswegs 50 ausgerichtet.

Ein beim Betrieb des Verbrennungsmotors durch die Abgasanlage 2 strömender Abgasstrom ist, was den Wärmetauscher 20 mit zugeordnetem Zulaufrohr 22 anlangt, mit Pfeilen 60 bezeichnet. Hierbei wird ein Strömungsquerschnitt in dem Zulaufrohr 22 betrachtet, der etwas strömungsaufwärts von dem Drallerzeuger 40 ist. Der dortige Abgasstrom 60 hat bei einem bestimmten Betriebszustand des Verbrennungsmotors einen bestimmten Massenstrom, eine daraus resultierende bestimmte (über den Strömungsquerschnitt gemittelte) Strömungsgeschwindigkeit und eine (über den Strömungsquerschnitt gemittelte) Temperatur.

Bei Strömungsgeschwindigkeiten, die in einem unteren Teilbereich des beim Betrieb in der Abgasanlage 2 auftretenden Bereichs von Strömungsgeschwindigkeiten sind, hat das Vorhandensein des Drallerzeugers 40 nur geringen Einfluss auf die Strömung. Der Drallerzeuger 40 stellt einen Strömungswiderstand dar, so dass die Strömung weit überwiegend durch den zentralen Strömungsweg 50 geht. Außerdem ist der strömungsmechanische Einfluss der Leitschaufeln 42 auf die Strömung relativ gering, weil die Leitschaufeln 42 auf Strömungsbeeinflussung bei höheren Strömungsgeschwindigkeiten ausgelegt sind. In Folge der geschilderten Verhältnisse strömt die den Abschnitt, wo sich der Drallerzeuger 40 befindet, verlassende Strömung zu nahezu 100% in den Eintrittsquerschnitt 32 des Innenrohrs 30 und verlässt das Innenrohr 30 durch den Austrittsquerschnitt 34 innerhalb des Ablaufrohrs 24. In einem Ringraum 70 zwischen dem Innenrohr 30 und der Umfangswand 28 des Wärmetauschers 20 befindet sich bewegungsarmes Abgas, welches gleichsam eine Wärmeisolation zwischen dem Innenrohr 30 und der Umfangswand 28 darstellt. Die Umfangswand 28 wird durch das Abgas nur in sehr geringem Maß erwärmt. Die Wärmeabfuhr durch die Umfangswand 28 des Wärmetauschers 20 an die Umgebung ist klein.

Wenn hingegen die Strömungsgeschwindigkeit des Abgasstroms 60 in einem oberen Teilbereich des beim Betrieb in der Abgasanlage auftretenden Bereichs von Strömungsgeschwindigkeiten ist, ist der Drallerzeuger 40 in Funktion (zumal der zuströmende Abgasstrom nicht mehr so leicht nahezu insgesamt in den zentralen Strömungsweg einströmen kenn, weil eine starke düsenartige Beschleunigung stattfinden müsste); die beim Durchströmen des Drallerzeugers 40 aufgeprägte Drallströmung übt Zentrifugalkräfte auf die Strömung aus, wodurch die Strömung im Bereich des Übergangs 26 radial nach außen in den Ringraum 70 zwischen dem Innenrohr 30 und der Umfangswand 28 geht. Im Bereich des Drallerzeugers 40 und im Bereich zwischen dem Drallerzeuger 40 und dem Eintrittsquerschnitt 32 des Innenrohrs 30 übt die äußere Drallströmung Zähigkeitskräfte auf den durch den zentralen Strömungsweg 50 strömenden Teil des Abgasstroms 60 aus und prägt weitgehend diesem Teil des Abgasstroms auch eine Umfangskomponente der Strömungsgeschwindigkeit auf. Als Ergebnis zeigt sich, dass bei hohen Strömungsgeschwindigkeiten ein sehr weit überwiegender Teil des Gesamt-Abgasstroms 60, bei geeigneter Auslegung sogar ein nahe 100% liegender Teil des Abgasstroms 60, durch den Ringraum 70 strömt. Jetzt liegen beste Voraussetzungen für Wärmeübergang zwischen dem Abgasstrom in dem Ringraum 70 und der Umfangswand 28 vor, weil ein großer Teil des Abgasstroms 60 in den Ringraum 70 strömt und weil hohe Strömungsgeschwindigkeit an der Innenseite der Umfangswand 28 herrscht und weil die Verweilzeit größer als bei rein axialer Durchströmung ist. Infolgedessen ist die Wärmeabfuhr des Wärmetauschers 20 an die Umgebung groß.

Zwischen den beiden beschriebenen Extremen gibt es einen mittleren Bereich von Strömungsgeschwindigkeiten, bei denen ein erster, merklicher Teil des Gesamt-Abgasstroms 60 durch das Innenrohr 30 strömt und ein zweiter, merklicher Teil des Gesamt-Abgasstroms 60 durch den Ringraum 70 strömt. Je größer prozentual der zweite Teil ist, desto größer ist - sonst gleiche Parameter vorausgesetzt-die Wärmeabfuhr mittels des Wärmetauschers 20.

Die Figuren 4 und 5 veranschaulichen die Situation, wenn der Wärmetauscher 20 einen elliptischen Querschnitt hat. Der Drallerzeuger 40 lässt sich unschwer so auslegen, dass die Drallströmung kräftig genug ist, dass auch ein entsprechend "flachgedrückter" Ringraum 70 ordnungsgemäß durchströmt wird.

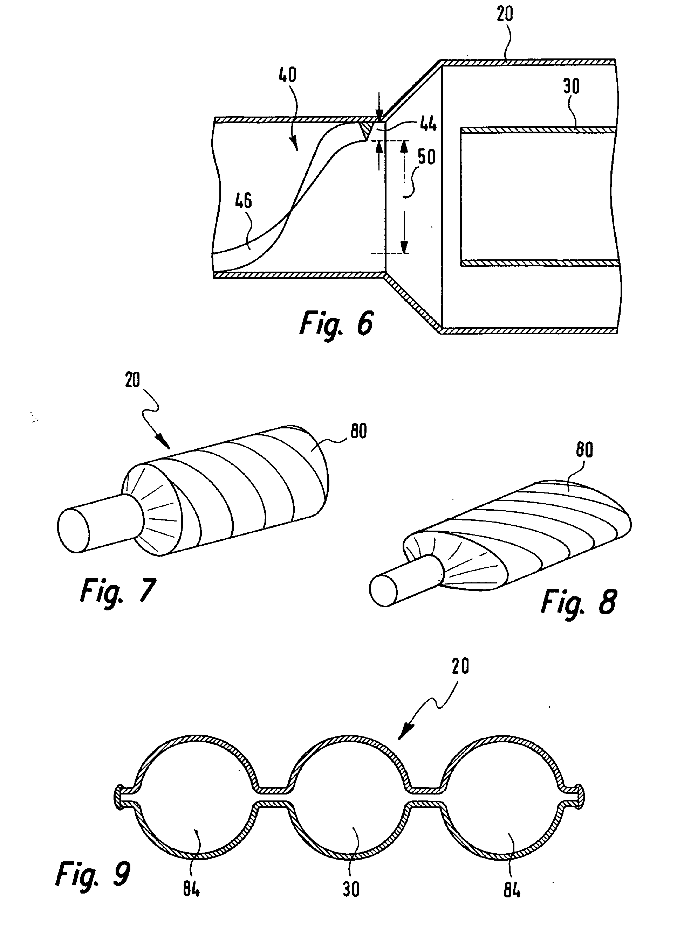

In Fig. 6 ist eine Ausführungsform dargestellt, bei der statt der Leitschaufeln 42 ein wendelförmig verlaufendes Strömungsleitelement 46 vorhanden ist. Das Strömungsleitelement 46 hat eine radiale Höhe 44. Statt nur ein wendelförmiges Strömungsleitelement 46 vorzusehen, wie in Fig. 6 gezeichnet, kann man auch zwei (oder noch mehr) Strömungsleitelemente 46 vorsehen, die um 180° (bzw. 90°, 72° etc.) versetzt beginnen. Der strömungsmechanische Effekt des Strömungsleitelements 46 ist analog dem Effekt, der vorstehend im Zusammenhang mit den Leitschaufeln 42 beschrieben worden ist. Das Strömungsleitelement 46 ist mit seinem Außenrand an der Innenseite des Zulaufrohrs 22 angeschweißt.

Fig. 7 veranschaulicht, dass man die Umfangswand 28 des Wärmetauschers 20 aus einem wendelförmig profilierten Rohr 80, wie es kommerziell erhältlich ist, herstellen kann. Das profilierte Rohr 80 hat einen an seiner Innenseite vorstehenden, wendelförmig verlaufenden Steg. Dieser Steg, in Fig. 2 in unterbrochener Linie bei 82 angedeutet, übt eine Strömungsbeeinflussung auf den durch den Ringraum 70 strömenden Abgasstrom aus. Bevorzugt ist eine strömungsmäßige Beeinflussung, die im stromaufwärtigen Teil (linker Teil in Fig. 7) des Wärmetauschers 20 die Umfangs-Strömungskomponente des dortigen Abgasstroms beibehält, aber im stromabwärtigen Teil der Länge des Wärmetauschers 20 (rechts in Fig. 7) eine allmähliche Umlenkung der dortigen Abgasströmung mehr in die axiale Richtung leistet.

Fig. 8 veranschaulicht, dass man aus einem Rohr 80 mit wendelförmiger Profilierung auch einen Wärmetauscher 20 mit elliptischer Querschnittskonfiguration herstellen kann, und zwar gleichsam durch Flachdrücken des Rohrs 80.

Fig. 9 zeigt einen Wärmetauscher 20 im Querschnitt, der ein Innenrohr 30 besitzt, der aber statt eines kontinuierlichen Ringraums 70 zwei äußere Rohre 84 hat. Den Übergangsabschnitt 26 muss man sich in diesem Fall als einen etwas flach gedrückten Trichter vorstellen. Wenn die Abgasströmung primär durch den freien zentralen Strömungsweg 50 geht, strömt sie im Wärmetauscher 20 primär durch das zentrale Innenrohr 30. Wenn der in Fig. 9 nicht sichtbare, aber analog zu den anderen Zeichnungsfiguren vorhandene Drallerzeuger 40 bei höheren Strömungsgeschwindigkeiten des Abgases mehr und mehr in Funktion tritt, wird den zwei äußeren Rohren 84 ein größer und größer werdender Anteil des Abgasstroms zugeteilt.

## Patentansprüche

1. Abgasanlage (2) für Verbrennungsmotoren, aufweisend einen Wärmetauscher (20) mit einer Umfangswand (28) und einem zugeordneten Zulaufrohr (22), zur Abfuhr von Wärme aus einem durch den Wärmetauscher (20) strömenden Abgasstrom (60),
**dadurch gekennzeichnet,**
**dass** in dem Zulaufrohr (22) ein Drallerzeuger (40) angeordnet ist, der einen zentralen Strömungsweg (50) durch das Zulaufrohr (22) frei lässt;
und **dass** ein auf die Verlängerung des freien zentralen Strömungswegs (50) ausgerichteter Bereich des Wärmetauschers (20) Strömungshindernis-frei ist.

2. Abgasanlage (2) nach Anspruch 1,
**dadurch gekennzeichnet, dass** in dem Wärmetauscher (20) ein vorn und hinten offenes Innenrohr (30) angeordnet ist, dessen Eintrittsquerschnitt (32) im Wesentlichen auf die Verlängerung des freien zentralen Strömungswegs (50) ausgerichtet ist.

3. Abgasanlage nach Anspruch 1 oder 2,
**dadurch gekennzeichnet, dass** der Wärmetauscher (20) einen größeren Strömungsquerschnitt als das Zulaufrohr (22) hat.

4. Abgasanlage nach Anspruch 1 bis 3,
**dadurch gekennzeichnet, dass** die Auslegung so ist, dass mindestens 40% des zuströmenden Abgasstroms (60) durch das Innenrohr (30) strömen, wenn der Abgasstrom (60) eine Strömungsgeschwindigkeit in einem unteren Teilbereich des beim Betrieb der Abgasanlage (2) auftretenden Bereichs von Strömungsgeschwindigkeiten hat.

5. Abgasanlage nach einem der Ansprüche 1 bis 4,
**dadurch gekennzeichnet, dass** die Auslegung so ist, dass mindestens 80% des zuströmenden Abgasstroms (60) durch den Ringraum (70) zwischen dem Innenrohr (30) und der Umfangswand (28) strömen, wenn der Abgasstrom (60) eine Strömungsgeschwindigkeit in einem oberen Teilbereich des beim Betrieb in der Abgasanlage (2) auftretenden Bereichs von Strömungsgeschwindigkeiten hat.

6. Abgasanlage nach einem der Ansprüche 1 bis 5,
**dadurch gekennzeichnet, dass** der Eintrittsquerschnitt des Innenrohrs (30) seiner Größe nach in dem Bereich von dem Querschnitt des freien zentralen Strömungswegs (50) bis zu dem Querschnitt des stromabwärtigen Endes des Zulaufrohrs (22) ist.

7. Abgasanlage nach einem der Ansprüche 1 bis 6,
**dadurch gekennzeichnet, dass** der Drallerzeuger (40) in dem Zulaufrohr (22) befestigt ist, vorzugsweise angeschweißt ist.

8. Abgasanlage nach einem der Ansprüche 1 bis 6,
**dadurch gekennzeichnet, dass** der Drallerzeuger (40) integral mit dem Zulaufrohr (22) hergestellt worden ist.

9. Abgasanlage nach einem der Ansprüche 1 bis 8,
**dadurch gekennzeichnet, dass** der Drallerzeuger (40) einen ringförmigen Kranz von Leitschaufeln (42) aufweist.

10. Abgasanlage nach einem der Ansprüche 1 bis 8,
**dadurch gekennzeichnet, dass** der Drallerzeuger (40) mindestens ein wendelförmig längs des Zulaufrohrs (22) verlaufendes Strömungsleitelement (46) aufweist.

11. Abgasanlage nach Anspruch 9 oder 10,
**dadurch gekennzeichnet, dass** der Anstellwinkel der Leitschaufeln (42) oder des Strömungsleitelements (46) längs des Zulaufrohrs (22) zunimmt.

12. Abgasanlage nach einem der Ansprüche 9 bis 11,
**dadurch gekennzeichnet, dass** die radiale Höhe der Leitschaufeln (42) oder des Strömungsleitelements (46) längs des Zulaufrohrs (22) zunimmt.

13. Abgasanlage nach einem der Ansprüche 1 bis 12,
**dadurch gekennzeichnet, dass** der Wärmetauscher (20) mindestens in einem Teil seiner Länge innen an seiner Umfangswand (28) ein Strömungsleitelement (82) aufweist, welches die dortige Abgasströmung mit Umfangskomponente leitet.

14. Abgasanlage nach einem der Ansprüche 1 bis 13,
**dadurch gekennzeichnet, dass** der Wärmetauscher (20) mindestens in einem Teil seiner Länge innen an seiner Umfangswand (28) ein Strömungsleitelement (82) aufweist, welches die dortige Abgasströmung im Sinne einer Vergrößerung ihrer Axialkomponente leitet.

15. Abgasanlage nach Anspruch 13 oder 14,
**dadurch gekennzeichnet, dass** das Strömungsleitelement(82) eine wendelartige Rippe ist, die durch nach innen vorragende Verformung des Materials der Umfangswand (28) hergestellt worden ist.

16. Abgasanlage nach einem der Ansprüche 1 bis 15,
**dadurch gekennzeichnet, dass** sich der Strömungsquerschnitt längs des Wärmetauschers (20) ändert.

17. Abgasanlage nach einem der Ansprüche 1 bis 16,
**dadurch gekennzeichnet, dass** die Umfangswand (28) des Wärmetauschers, im Querschnitt quer zur Durchströmungsrichtung betrachtet, eine im Wesentlichen elliptische Konfiguration hat.

18. Abgasanlage nach einem der Ansprüche 1 bis 17,
**dadurch gekennzeichnet, dass** sich der Wärmetauscher (20) stromaufwärts von einem katalytischen Abgaskonverter (10) befindet.
